# EUROPEAN PATENT APPLICATION

(11) **EP 3 854 217 A1**
(43) Date of publication of application: **28.07.2021**
(21) Application number: 21155610.5
(22) Date of filing: 30.09.2016
(51) Int. Cl.: A23G 3/34, A23G 3/42

(54) **CONFECTIONS CONTAINING ALLULOSE**

(30) Priority: 02.10.2015 US 201562236468 P
(62) Divisional of application: 16779316.5
(71) Applicant: Wm. Wrigley Jr. Company, Chicago, IL 60642 (US)
(72) Inventor: BARKALOW, David G., Illinois, Chicago 60642 (US); HSU, Chia-Hua, Illinois, Chicago 60642 (US); HASELEU, Andrea, Illinois, Chicago 60642 (US); STAWSKI, Barbara, Illinois, Chicago 60642 (US)
(74) Representative: Haseltine Lake Kempner LLP

(57) **Abstract**

A low calorie, low laxation confection such as a gelled candy having acceptable texture, stability, clarity, and flavor delivery that contains a bulk sweetener comprising allulose (psicose). Allulose is combined with sugars, carbohydrates, or polyols to make consumer acceptable confections.

## Description

### BACKGROUND OF THE INVENTION

The present invention relates to improved confectionaries. More particularly, the invention relates to improving confections by the use of specific bulking agents in sugar and non-sugar confectionary products to give a suitable texture, texture, stability, clarity, and flavor delivery. The improved confectionary compositions may also be used in a variety of confectionary products such as sugar and sugar-free chewy, hard or gelled candies.

In recent years, efforts have been devoted to replace sugar and sugar syrups normally found in confectionary products with other carbohydrates and non-carbohydrates. Non-sugar or sugar-free confections have been growing in popularity, and use sugar alcohols or polyols to replace sugar and sugar syrups. The most popular polyols are sorbitol, mannitol and xylitol. New polyols are being developed using new technology to replace these polyols. New polyols have various unique properties which can improve the taste, texture, and appearance of confectionaries for consumers.

A current consumer concern with sucrose based confections is cariogenicity and caloric content. Most sugars (including sucrose, maltose, fructose, and dextrose) are cariogenic and caloric. In general, cariogenic ingredients create dental caries. Dental caries is an infectious disease that damages the structure of teeth. Non-cariogenicity or "tooth friendliness" of a substance such as a saccharide or a saccharide derivative may be determined by means of intraoral pH telemetry such as used by Tooth Friendly International, a non-profit organization. In a standard procedure, plaque pH is measured in at least four persons during and for 30 minutes after consumption of a substance to be tested with a plaque-covered electrode. Products which do not lower plaque pH below 5.7, under the test conditions, are considered to lack cariogenic potential.

Efforts have been made to improve the healthiness of confections. For the most part, consumers would prefer that a confection is non-cariogenic due to the dental benefits. With the goal of reducing cariogenicity, confections have been made with reduced sugar content. One way of reducing sugar content, is to shift the proportion of corn syrup to sucrose in a confection formula, so that the confection would contain less sucrose. This option has limited usefulness towards reducing confection cariogenicity because corn syrup also contains various sugars. Also, there may be a necessary balance in the amount of doctoring agent to bulking sweetener agent in order to have a confection that has a consumer acceptable texture, flavor delivery, and stability to cold flow and stickiness formation.

Sorbitol, maltitol, and isomalt are polyols that have been used in an attempt to make healthier confections that are less cariogenic than traditional confections made with corn syrup and sucrose at a 55:45 wt. % solids. As these bulk sweetener agents are hygroscopic and are quick to crystallize from a concentrated solution state, a doctoring agent needs to be combined with them to make commercially acceptable textured confections that are at least as stable to cold flow and stickiness formation as confections made with corn syrup and sucrose at a 55:45 wt. % solids. A common doctoring agent is hydrogenated starch hydrolysate (HSH), which is a sugar-free syrup containing polyols of various sizes, mostly sorbitol and/or maltitol. A hydrogenated starch hydrolysate with 50 wt. % or higher maltitol is called maltitol syrup. As with corn syrup combined with sucrose, HSH can interfere with sorbitol, maltitol, and isomalt crystallization and absorb free water in the confection. These polyol bulking sweetener agents and doctoring agents are non-cariogenic and are less caloric than corn syrup combined with sucrose, but they may cause gastrointestinal disturbance (e.g., laxation).

A disadvantage of many polyols is the possibility of causing gastrointestinal disturbances (such as "laxation") upon consumption. Typically, a material is considered not to cause gastrointestinal disturbance (e.g., non-laxative), if such material is either substantially absorbed before entering the large intestine or passes though the large intestine substantially unchanged, in the quantities present in the product consumed. The amount of gastrointestinal disturbance or laxation distress experienced by a consumer of a confection typically depends on the sensitivity of the consumer, the specific polyol used in the confection, and the amount of confection consumed.

Another disadvantage of using sorbitol, maltitol, and isomalt ingredients in confections is that these polyols are not considered natural in many countries, while sugar may be considered a natural ingredient

The non- sugar polyols have the advantage of not contributing to dental caries of consumers, as well as being able to be consumed by diabetics. However, all polyols have the disadvantage of causing gastro- intestinal disturbances if consumed in too great of a quantity. Therefore it would be a great advantage to be able to use a carbohydrate or carbohydrate-like food ingredient for confectionaries that would act as a bulking agent, but not contribute to dental caries nor cause gastro- intestinal disturbances.

Therefore there is a need for a confection, using doctoring agents and bulking sweetener agents, that gives acceptable texture, stability, clarity, and flavor delivery, while being less cariogenic than traditional corn syrup and sucrose confections (at a 55:45 wt. % solids) but at the same time not causing gastrointestinal disturbances. Consumers do not want to sacrifice flavor delivery and texture for less cariogenicity. Manufactures cannot afford to make and sell confections with a shorter shelf life than that of current traditional corn syrup and sucrose confections.

One such bulking agent is called allulose. This bulking agent, or bulk sweetener, is approved for use in food products in the U.S., but not in all countries. Although a sugar, allulose may not contribute to dental caries, nor does it cause significant gastro-intestinal disturbances and is low in calories. The use of allulose as a low- calorie carbohydrate sweetener and bulking agent is disclosed in WO 2015/075473.

### SUMMARY OF THE INVENTION

The present invention relates to improved confections, more specifically, the invention relates to improved confections using bulk sweetener agents and doctoring agents that give an acceptable texture, stability, clarity and flavor delivery, while being less caloric than traditional corn syrup and sugar confections, and while not causing gastrointestinal disturbances.

Reduced calorie, low laxation confections, such as chewy candies, hard candy, or gelled candy having acceptable texture, stability, clarity, flavor delivery and shelf life comprising allulose (psicose) are provided. Allulose is combined with other sugars, carbohydrates, or polyols to make consumer acceptable confections.

Confections may contain, but are not limited to, gelling agents, bulking sweetener agent, doctoring agent, flavors, actives, colors, sensates, and high intensity sweeteners.

The bulk sweetener, allulose, may be combined with other bulk sweeteners for use in confections, including but not limited to sucrose, dextrose, fructose, maltose, maltodextrin, xylose, as well as sugar alcohols including but not limited to sorbitol, mannitol, xylitol, maltitol, lactitol, palatinit, and hydrogenated starch hydrolyzates such as Lycasin. The bulk sweetener, allulose, may be combined in the gum formulation or codried or dry blended with the other bulk sweeteners prior to use in the gum formulation. Co- drying may be done by various methods of spray drying, fluid bed coating, coacervation, and other granulating or agglomerating techniques. The bulk sweetener, allulose, may also be combined with high potency sweeteners including, but not limited to, thaumatin, aspartame, acesulfame K, sodium saccharin, glycyrrhizin, alitame, cyclamate, stevioside, and dihydrochalcones.

Even though Allulose is very similar to sucrose, it may not be cariogenic and is non-caloric, nor does it cause significant gastro- intestinal disturbances, giving a highly consumer-acceptable confectionary product.

### BRIEF DESCRIPTION OF THE DRAWINGS

**Figure 1** provides a graphical depiction of the gummy formulations described in Table 1, wherein the each sample was tested for sensory attributes.
**Figure 2** provides a graphical depiction of the gummy formulations described in Table 1, wherein the each sample was tested rheologically.
**Figure 3** provides a graphical depiction of the gummy formulas described in Table 1, wherein each sample was tested for texture.

### DESCRIPTION OF THE INVENTION

Allulose (psicose) is a carbohydrate bulking agent that is similar to fructose. Allulose is an isomer of fructose obtained by isomerization of fructose, and its sweetness intensity is about 70% of that of sucrose.

Allulose is produced by Matsutani and is marketed under the tradename of ASTRACEA™. It is also being marketed by Tate&Lyle under the tradename of DOLCIA PRIMA™ and by AGG under the tradename of ALLSWEET™. Allulose is amonosaccharide, is available as an anhydrous crystalline material and in a liquid syrup. In a variety of tests, pure allulose has been found to not cause gastrointestinal disturbances and is low in calories. Allulose, like sucrose, has a high melting point of 109°C. Allulose can be obtained in water as an allulose syrup. Any of these forms of allulose may be used in confections, and the terms allulose and allulose solid/syrup herein refers to all forms.

Allulose may be added to confections in its amorphous or crystalline solid form or in its liquid form. Its solubility in water is very high at room temperature, but increases with increased temperature. Allulosemay be used in confectionaries as a texture and flavor modifier, bulking agent, and may improve texture, flavor, and shelf life properties. Allulose may replace solids like sucrose, dextrose or lactose when used in its powder form, or may replace syrups when used in its liquid or syrup form. At levels of about 0.5% to about 25%, allulose may replace part of the solids in sugar confections or, as a liquid, all or part of the syrup in sugar confections. At higher levels of about 25% to about 50% of the confection formulation, allulose may replace all of the solids in a confectionary. A preferred range of allulose is about 5% to about 50%, and more preferably about 10% to about 40%, of the confection.

If allulose syrup (liquid) is used, the syrup solids content may vary widely. The allulose syrup may comprise a solids content of about 1-95%, or from about 20-75% by weight of the allulose syrup. Allulose syrups having varying ranges of solids can be obtained from suppliers. Adjusting the solids content can alter the physical properties of the allulose syrup (i.e., viscosity) to achieve desired attributes for processing or product performance

Although allulose is similar to sucrose, its possible unique anti-caries and its low caloric properties suggest it may be used in confection formulas containing non-sugar ingredients. Non sugar ingredients are alditols or polyols such as sorbitol, mannitol, xylitol, lactitol, palatinit (Isomalt), maltitol and hydrogenated starch hydrolyzates (HSH). These alditols are used in a variety of combinations to develop unique sugarless confection formulations. Allulose may be used to replace the individual alditols or combinations of alditols. With partial replacement of one or more alditols, allulose can be used at levels of about 0.5 to 25% by weight of the confection. If allulose replaces a large amount or most of the alditols, this level may be about 25% to about 90% by weight of the confectionary formulation.

Allulose solids (crystalline or amorphous) or syrup may replace part or all of the sorbitol liquid sometimes found in sugarless confections. New sugar-free syrups like hydrogenated starch hydrolyzates, such as Lycasin may also be replaced in part or totally by allulose solids or syrup. The same product advantages found with hydrogenated starch hydrolysate syrups, such as improved shelf life, improved texture and improved high potency sweetener stability (such as aspartame) may also be found with the use of allulose solids or syrup.

Recent advances use hydrogenated starch hydrolyzates (HSH) and glycerin preblended and co- evaporated to reduce moisture in some sugar-free confections. Allulose solids and/or syrup may be used to replace part or all of the HSH/glycerin blends. Allulose solids and/or syrup may also replace HSH in the preblend with glycerin and be co-evaporated with glycerin to obtain a low moisture, non-crystallizable blend. Combinations of allulose solids/syrup with alditols like sorbitol, maltitol, xylitol, lactitol and mannitol in aqueous form may also be blended with glycerin and co-evaporated for use in confections.

In a similar manner, allulose solids/syrup preblended in glycerin and co-evaporated may be used in conventional sugar confection formulations. Allulose may be combined with other sugars like dextrose, sucrose, lactose, maltose, invert sugar, fructose and corn syrup solids to form a liquid mix to be blended with glycerin and co-evaporated. Allulose may also be combined with other sugars like tagatose, trehalose, isomaltulose, other carbohydrates such as inulin, bio-agave, ismaltooligosaccharides, maltodextrins, and other types of carbohydrates to form a liquid mix to be blended with glycerin and co-evaporated. Allulose solids/syrup may also be mixed with syrup blended with glycerin and co-evaporated for use in sugar confections. Because allulose's natural humectancy and it low molecular weight, syrup blends with allulose may not need to be co-evaporated with glycerin. Coevaporated syrup blends of allulose with dextrose, sucrose, lactose, maltose, invert sugar, fructose, tagatose, trehalose, isomaltulose, and other carbohydrates like those mentioned above, as well as combinations of these sugars may be made at high solids and low moisture for confections. In addition, coevaporated syrups may be made with blends of sorbitol, xylitol, erythritol, maltitol, lactitol, isomalt, mannitol, hydrogenated starch hydrolyzates (HSH), and combinations without glycerin to obtain high solids syrup with low moisture.

A bulking sweetener agent is included in the confection for volume, bulk, hardness, and syrup formation. The bulking sweetener agents have a tendency to quickly crystallize, which would make an unacceptable confection due to its lack of clarity unless the crystallization is controlled. The doctoring agent is included in the hard candy of this invention to prevent the bulking sweetener agent from crystallizing, while not preventing candy mass from hardening. Use of Allulose in confections can reduce crystallization especially when used in combinations with sucrose, dextrose, maltose, xylitol, erythritol, and other readily crystallizable sugars and alditols.

As noted previously, many different sugars have been used to produce confections besides sucrose. Some of these are dextrose, fructose, maltose, isomaltulose, trehalose, and tagatose as well as alditols or polyols, such as sorbitol, maltitol, xylitol, mannitol, erythritol, and isomalt. The polyols can be used to make reduced calorie and non-cariogenic confections. In the case of doctoring agents used in many types of confections there is a wide variety of carbohydrate materials that can effect crystallization or sugars and polyols. The most common is corn syrup in sugar confections, and hydrogenated starch hydrolyzates (HSH) in sugar free confections. Other new materials that may be used as doctoring agents are inulin, indigestible dextrin, sucromalt, polydextrose, Nutriose, fructooligosaccharides (FOS), bioagave, and maltodextrins. Some new sugars, polyols, and doctoring agents are noted hear.

Isomaltulose is a sugar that can be used as a bulking sweetener agent to make an acceptable confection. Isomaltulose (also called palatinose) is a reducing glucose-fructose disaccharide in which glucose and fructose are linked through their respective 1 and 6 carbon atoms. Isomaltulose commercially is produced enzymatically from sucrose. Because isomaltulose is digested much slower than sucrose, isomaltulose has a lower glycemic response than sucrose making it acceptable to diabetics. Isomaltulose is tooth friendly due to its slow digestion in the mouth. Isomaltulose is non-laxative, and non-cariogenic, even though it is a "sugar". The challenge with isomaltulose is that it is very fast crystallizing from a supersaturated solution. A suitable doctoring agent is needed to control the crystallization.

Trehalose is a sugar that also can be used as a bulking sweetener agent to make an acceptable confection. Trehalose, also known as mycose or tremalose, is a natural alpha-linked disaccharide formed by an a,a-1,1-glucoside bond between two a-glucose units, giving it the name of a-D-glucopyranosyl-(1-1)-a-D-glucopyranoside. The bonding makes trehalose very resistant to acid hydrolysis. Trehalose is non-laxative and non-cariogenic, even though it is a sugar.

Erythritol is a polyol that can be used as a bulking sweetener agent to make an acceptable confection. Erythritol is a four-carbon sugar alcohol (i.e., polyol). Erythritol is produced from glucose by fermentation with the yeast, Moniliella pollinis. Erythritol is absorbed into the bloodstream in the small intestine. Because erythritol is absorbed before it enters the large intestine, it does not normally cause the laxative effects that are often experienced with consumption of other polyols, such as sorbitol, maltitol, isomalt and xylitol. Erythritol cannot be metabolized by oral bacteria, so it does not contribute to tooth decay. Erythritol can be used to make a confection that is non-cariogenic and non-laxative.

Inulin is a material that can be used as a doctoring agent to make an acceptable confection. Inulin is a group of oligosaccharides occurring naturally in many plants and belongs to a class of carbohydrates called fructans. Inulin is a prebiotic fermentable fiber and is metabolized by gut flora yields short chain fatty acids, which are reported to increase absorption of calcium, magnesium, and iron. Inulin also promotes an increase in the mass and health of intestinal Lactobacillus and Bifidobacterium populations. Inulin is composed of linear chains of fructose units linked by 13 (21) bonds and is often terminated by a glucose unit. Suitable inulins useful in this invention typically contain chains of around 3 to 60 fructose units. Inulin sources contain polymers in a distribution of chain lengths, which are described by their DP (number of sugar units). Typically short chain linear inulin has DP<20 and long chain linear inulin has DP>20. Typically, linear inulin material is in a long chain form, though other length variations are available. A typical long chain linear inulin source, such as Beneo HP inulin supplied by Orafti, has an average DP>23, creating an inulin material with long polymer chains. A typical short chain linear inulin source, such as DeSugar inulin supplied by Cargill, has an average DP =10, creating an inulin material with short polymer chains. A branched inulin (also called phlein), such as BoiAgave™, supplied by GTC Nutrition, has a high degree of polymerization. Inulin has a minimal impact on blood sugar and does not raise blood triglycerides, making it generally considered suitable for diabetics.

Indigestible dextrin is a material that can be used as a doctoring agent to make an acceptable confection. Indigestible dextrin is a group of low molecular weight carbohydrates produced by hydrolysis of starch by acid in a roasting process. These dextrins are mixtures of a-(14)-linked D-glucose polymers starting with an- a-(16) bond, which are then treated with additional roasting to create branched carbohydrates or pyrodextrins. The dextrins are further treated with enzymes to make them highly branched and virtually indigestible. Indigestible dextrins do not contribute to dental caries (i.e., are non-cariogenic) due to their low reducing sugar levels. Typical indigestible dextrins contain about 10 to 30 (preferably 10 to 25) saccharide units. Varieties of such indigestible dextrins are sold under trade names of Fibersol™ and Nutriose™. Fibersol™ is marketed by Fibersol America, a division of Matsutani Chemical Industry Co., Ltd of Hyogo-Pref., Japan. Nutriose™ is marketed by Roquette Freres, of Lestrem, France.

Polydextrose is a material that can be used as a doctoring agent to make an acceptable confection. Polydextrose (available under the trade name LitesseTM from Danisco) is a soluble, random polymer of dextrose containing minor (less than about 10 wt.%) amounts of sorbitol (at least 2 wt.%) and citric acid. Typical polydextrose polymers contain around 10 to 50 saccharide units, preferably 20 to 40 saccharide units.

Sucromalt is a material that can be used as a doctoring agent to make an acceptable confection. Sucromalt (available under the trade name of Sucomalt™ from Cargill) is a soluble oligoglucose. Sucromalt does not cause gastrointestinal distress. Currently, sucromalt supplied by Cargill contains about 35% mono- and di-saccharides (e.g., fructose).

### I. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification may mean "one," but it is also consistent with the meaning of "one or more," "at least one," and "one or more than one." Still further, the terms "having," "including," "containing" and "comprising" are interchangeable and one of skill in the art is cognizant that these terms are open ended terms.

The term "about" or "approximately" means within an acceptable error range for the particular value as determined by one of ordinary skill in the art, which will depend in part on how the value is measured or determined, i.e., the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

All percentages and ratios used herein are by weight of the total composition and all measurements made are at 25°C, unless otherwise designated.

An amorphous solid, is any noncrystalline solid. A crystal or crystalline solid is a solid material whose constituents, such as atoms, molecules or ions, are arranged in a highly ordered microscopic structure, forming a crystal lattice that extends in all directions. The allulose of the present invention may be used in its amorphous or crystalline solid forms.

### II. Gelled Confections

One typical confection is a gelled confection. Consumers like gelled confections. Gelled confections are sometimes called gummies, jellies, or gum drops. Gelled confections can be transparent, translucent, or opaque, with transparent being preferred by consumers. Gelled confections are often chewed as they have a firm, elastic texture that appeals to consumers. As gelled confections are chewed, they break apart into smaller pieces, which then dissolve in the mouth. These smaller confection pieces dissolve slowly in the mouth and deliver flavor and sweetness as they dissolve into a pleasant syrup during chewing. Gelled confections may contain, but are not limited to, gelling agents, bulking sweetener agent, doctoring agent, flavors, actives, colors, sensates, and high intensity sweeteners.

Gelled confection products contain at least one gelling agent. The gelling agent includes, but is not limited to, gelatin, pectin, starch, dextrins, hydrocolloids, milk based proteins, and combinations thereof. The gelling agent creates a gel matrix throughout the confection through its loosely connected strands. The amount and length of the gelling agent strands, and the connections between the strands, creates a flexible, elastic matrix with water filling the spaces between and around the strands.

The other ingredients in the confection may also be positioned between and around the strands. The elastic texture of the confection dictates the chewing texture and how long the confection mass remains in one piece during chewing. By elastic texture it is meant that the confection has some give and stretch before breaking when pressure is applied by teeth during chewing

Gelled confection is a food product that is formed by a) creating a saturated solution containing water, bulking sweetener agent, and doctoring agent; b) creating a hydrated suspension containing water and gelling agent; c) combining the saturated solution with the hydrated suspension; d) removing water from the combination by cooking (i.e., heating); e) cooling the confection mass; and f) finishing the confection mass by removing additional water and forming the confection mass into individual pieces. The finishing step also contains tempering the gelled confection to room temperature.

For gelled confections, allulose may be used as part of the bulking sweetener agent to give a low calorie gelled confection. In addition, gelled confections may contain, but are not limited to, gelling agents, bulking sweetener agent, doctoring agent, flavors, actives, colors, sensates, and high intensity sweeteners.

Gelled confection products contain at least one gelling agent. The gelling agent includes, but is not limited to, gelatin, pectin, starch, dextrins, hydrocolloids, milk based proteins, and combinations thereof. The gelling agent creates a gel matrix throughout the confection through its loosely connected strands. The amount and length of the gelling agent strands, and the connections between the strands, creates a flexible, elastic matrix with water filling the spaces between and around the strands. The other ingredients in the confection may also be positioned between and around the strands. The elastic texture of the confection dictates the chewing texture and how long the confection mass remains in one piece during chewing. By elastic texture it is meant that the confection has some give and stretch before breaking when pressure is applied by teeth during chewing.

Gelling agents are humectants and are water soluble, so the elastic texture of the finished gelled confection is affected by the water content of the confection. Moisture puts distance between the strands, which limits contact between strands and allows movement of the strands. Higher amounts of water may create a softer, less elastic confection texture because of the greater distance between the gelling agent strands and fewer contact points. If the confection's moisture level is low, the confection may be hard because of too many contacts between strands and because of too little room between strands to allow movement without breaking during chewing.

Because the gelling agents are humectants, they may control a certain amount of the water in a gelled confection. If the gelling agent in a gelled confection controls the water in the confection, the water will not migrate (i.e., move) to the confection surface and make a sticky product surface. During storage, water may become "free" (i.e., excess) during storage when the gelling agent strands contract and "squeeze" water out of the gelling agent matrix. During storage, the gelling agent may pick up water from the environment. If enough moisture is absorbed during storage, a freshly produced firm gelled confection may deform and flow over time (i.e., cold flow), that is the confection piece may flatten and spread due to the matrix weakening as connections are lost between strands due to excess water in the matrix. On the other hand, if during storage a gelled confection loses moisture to the environment, such as by evaporation, the originally flexible elastic gelled confection may become firm and tough as the strands are brought into closer contact with each other.

To be commercially acceptable, the gelled confection needs to have a non-sticky surface and stable shape, both right after processing and after storage at a reasonable temperature and relative humidity. That is, the gelled confection of this invention may be at least as stable to temperature and relative humidity as traditional confections made with corn syrup and sucrose at a 55:45 wt. % solids ratio.

Ingredients in the confection mass, other than gelling agent, can also affect the texture of a gelled confection. For example, gelled confections contain at least one bulking sweetener agent and at least one doctoring agent. Both bulking sweetener agents and doctoring agents supply volume and weight to gelled confections. Bulking sweetener agents also supply the primary dissolvable mass in the confection, which creates a syrup-like solution in the mouth during chewing. Doctoring agents may also supply a dissolvable mass, which also creates a syrup-like solution in the mouth. This syrup-like solution is what carries any additional water soluble ingredients, such as flavors and sensates, to the tongue. Both the bulking sweetener agents and doctoring agents must be chosen such that they will not mask the perception of flavors and sensates.

The gelled confection may contain some bulking sweetener agent in crystalline form. The amount in crystalline form may be limited in gelled confections, as the crystals may interfere with confection elastic texture, may create a grainy mouthfeel, and may negatively affect clarity. Bulking sweetener agent in crystalline form also affects the solubility of the full gelled confection, which may also affect the delivery of flavors and sensates to the mouth.

Typically, the bulking sweetener agent is combined with water and the doctoring agent to create a saturated solution, which is then mixed with a suspension of gelling agent in water. After the combination is cooked (i.e., heated), the agent sets up a matrix throughout the confection as the confection mass cools. Final confection mass moisture level may be further reduced to create less distance between gelling agent strands, while maintaining enough moisture to allow flexibility of the matrix. Methods for further reducing moisture include, but are not limited to, baking, extruding, starch molding, and combinations thereof. Baking is a process wherein the confection mass is poured into molds, which are then held in a heated chamber until the desired amount of water has evaporated. The pieces are then removed from the molds. Extruding is a process wherein the confection mass is poured into or made in an apparatus (i.e., extruder) which can then pull water from the confection mass through heat application and evaporation. The extruded candy mass is then cut into pieces when it leaves the extruder. Starch molding is a process wherein the confection mass is poured into shapes pressed into a cake of starch. The starch pulls water from the confection mass during storage under controlled temperature and humidity conditions. When the confections are at the appropriate moisture content, they are removed from the starch cake.

As discussed above, the moisture in the confection mass is reduced during processing. Under certain low moisture conditions, the bulking sweetener agent may crystallize in the finished confection, creating defects in texture, clarity, and dissolving rate. One role of a doctoring agent is to interfere with the bulking sweetener agent's tendency to form crystals as the moisture level in the confection mass decreases, without causing different texture defects, such as softening and cold flow.

Doctoring agents influence gelled confection stability during cooking and storage by controlling the water present in the confection. The water may be present due to lack of evaporation (i.e., removal) during cooking, baking, extruding or starch molding or due to water absorption during storage. Excess water in a gelled confection that is not controlled by the gelling agent or the doctoring agent may start to dissolve the gelled confection contents. As a result of this, the gelled confection may deform and flow during storage (i.e., cold flow). The confection surface may also become sticky as uncontrolled water dissolves bulking sweetener agent on the outer surface of the confection. The gelled confection texture could change from a consumer acceptable firm, elastic texture, to a too soft and non-elastic texture.

Doctoring agents additionally influence gelled confection stability during storage by keeping moisture in the gelled confection during storage at low humidity conditions. As discussed above, reduction of moisture in a gelled confection could negatively change confection texture from elastic to inelastic, and possibly even to hard or brittle. Doctoring agents are humectants, so they attract and hold water. This means that doctoring agents can control the water left in a formula by processing. Also doctoring agents can cause confections to absorb water from the atmosphere.

A stable gelled confection exists when there is a balance between bulking sweetener agents and doctoring agents. High levels of doctoring agent may prevent the crystallization of bulking sweetener agent by interfering with bulking sweetener agent crystal formation. Too high a level of doctoring agent may cause its own defects by creating a too soft and/or sticky texture due to the doctoring agent interfering with gelling strand contacting and/or by the doctoring agent absorbing too much water from the environment. Accordingly, it is necessary to find a balance of ingredients that delivers an optimal gelled confection.

A traditional gelled confection has a balance of bulking sweetener agent and doctoring agent to obtain the optimal consumer accepted gelled confection. Sucrose is the traditional bulking sweetener agent for gelled confections, with corn syrup being the traditional doctoring agent partnered with it. Corn syrup, with its long and short carbohydrate chains, can physically interfere with sucrose crystallization and can absorb water in the gelled confection. Corn syrup at 55 wt. % solids and sucrose at 45 wt. % solids are a stable balance of doctoring agent and bulking sweetener agent that make a gelled confection with consumer acceptable texture, clarity, stability, and flavor delivery. Allulose may replace a portion of the sucrose or bulk sweetening agent, or an allulose syrup may replace a portion of sucrose and water used in a gelled confection.

Allulose may replace a portion of the sucrose, bulk sweetening agent, or an allulose syrup may replace a portion of corn syrup and water used in a gelled confection.

### III. Hard Candy

Consumers like hard candy. Hard candy is sometimes called boiled, glass, amorphous, or rock candy. Typical forms of hard candy are lollipops and lozenges. For hard candies, allulose may be used as part of the bulking sweetener agent to give a low calorie confection.

Hard candy can be transparent, translucent, or opaque, with transparent being preferred by consumers. These confectionary products dissolve slowly in the mouth and deliver flavor and sweetness as they dissolve. They also crunch when chewed, that is, they give an audible sound as they break into smaller pieces when chewed.

By "hard", it is meant that the candy is firm, non-flexible, and non-deforming at room temperature (e.g., 25°C). The hard mass could contain some crystalline material, though crystalline material reduces candy clarity and the preferred hard candy is translucent. To be commercially acceptable, the hard candy needs to have a non-sticky surface and stable shape, both upon cooling to room temperature and after a reasonable storage at a reasonable relative humidity, that is, the hard candy must be at least as stable as sucrose: corn syrup hard candy at an 80:20 dry solids wt. % ratio.

Typically, hard candy contains one or more bulking sweetener agents, one or more doctoring agents, and usually additional components such as flavors, sensates, colors, and high intensity sweeteners. High intensity sweeteners (e.g., aspartame, sucralose) are added to hard candies to adjust the sweetness to meet particular market preferences. High intensity sweeteners are used in particular when the bulking sweetener agents are less sweet than sucrose.

Both bulking sweetener agents and doctoring agents supply volume and weight to hard candy. The bulking sweetener agent supplies the primary dissolvable mass, which creates a syrup-like solution in the mouth during sucking. Doctoring agents also can supply a dissolvable mass, which creates a syrup-like solution in the mouth. This syrup-like solution is what carries the flavors and sensates to the tongue. Both the bulking sweetener agent and doctoring agent must be chosen such that they will not mask the perception of flavors and sensates.

Typically, the bulking sweetener agent is combined with water and then heated, cooked or boiled to create a supersaturated solution. As the supersaturated solution cools it forms an amorphous, glass state, which then hardens as it cools. Under certain conditions, the bulking sweetener agent will crystallize from this glass state, which causes defects in the hard candy due to loss of clarity and changes in candy texture perceived during chewing and sucking. The key role of the doctoring agent is to interfere with the bulking sweetener agent's tendency to form crystals as the bulking sweetener agent mass cools without causing defects such as softening the candy or creating surface stickiness.

Doctoring agents additionally influence hard candy stability during storage by controlling the water present in the candy, the water being present due to lack of evaporation during heating, cooking, or boiling or absorption during storage. Most doctoring agents and some bulking sweetener agents are hygroscopic and tend to absorb water during storage, especially under high humidities. Excess water in a hard candy that is not controlled by the doctoring agent will start to dissolve the hard candy contents and the hard candy will deform, flow, and/or spread, a situation called "cold flow". The candy could also become sticky as the water dissolves sweetener on the outer surface of the hard candy.

When the bulking agent is very fast crystallizing (such as with isomaltulose and erythritol) a delicate balance is needed between the ratio of bulking sweetener agent and doctoring agent. More doctoring agent will prevent the bulking sweetener agent crystallization, but too much doctoring agent will cause its own defects, including: a) preventing the bulking sweetener agent glass state from hardening, and/or b) increasing the absorption of water by the hard candy during storage causing cold flow and/or surface stickiness.

Sucrose is the traditional bulking sweetener agent for hard candy, with corn syrup being the traditional doctoring agent partnered with it. Sucrose, water, and corn syrup are traditionally heated, cooked, or boiled until there is less than 4% water in the mass, and then cooled. The mass can be shaped by pouring it into molds or onto a flat or semiflat surface and letting it cool to room temperature, or the mass can be shaped by cooling it to a malleable, semi-plastic stage and forming it into pieces with a drop roller, rotary cutter (i.e. pair of rollers or belts with opposing concave openings), or other forming apparatus. Sucrose is hygroscopic, especially while in an amorphous, glass state. Corn syrup is hygroscopic also, but it has a high capacity to absorb water because of its long and short carbohydrate chains, which allows corn syrup to control the free water in a hard candy. Corn syrup, with its long and short carbohydrate chains, can also physically interfere with sucrose crystallization.

Sorbitol and isomalt are polyols that have been used in an attempt at making healthier hard candy that is less cariogenic than typical hard candy made with sucrose and corn syrup at a 80:20 dry solids wt.%. As both of these bulking sweetener agents are hygroscopic and are quick to crystallize from a molten or supersaturated state, a doctoring agent needs to be combined with them to make commercially acceptable hard candy, that is, hard candy that is at least as stable to cold flow and stickiness formation as hard candy made with sucrose and corn syrup at a 80:20 dry solids wt. %. A common doctoring agent is hydrogenated starch hydrolysate (HSH), which is a sugar-free syrup containing polyols of various sizes, mostly sorbitol and/or maltitol. As with corn syrup combined with sucrose, HSH can interfere with sorbitol and isomalt crystallization and absorb free water in the heated, cooked, or boiled candy mass. The combination of sorbitol or isomalt with HSH does create a heated, cooked, or boiled mass that can be poured into molds or onto flat or semi-flat surfaces, where it will harden, or them be shaped by a drop roller, rotary cutter, or other forming apparatus.

A bulking sweetener agent is included in the hard candy for volume, bulk, hardness and syrup formation. He bulking sweetener agents have a tendency to crystallize which would make an unacceptable hard candy due to its lack of clarity unless crystallinity is controlled. The doctoring agent is included in the hard candy to prevent the bulking sweetener agent from crystallizing, while not preventing the candy mass from hardening. Typically, hard candy products contain sucrose as the bulking sweetener agent and corn syrup as the doctoring agent.

Besides the bulking sweetener agent and doctoring agent, other ingredients are commonly added to hard candy including, but not limited to, flavors, acids, sensates, cooling agents, active ingredients (e.g. drugs and mendicants), and colors. High intensity sweeteners (HIS) can be added to increase the hard candy sweetness level, in particular when the bulking sweetener agent is less sweet than sucrose.

Just shifting the proportion of sucrose to corn syrup in the hard candy formula so that the hard candy contains less sucrose is not a useful option towards reducing product cariogenicity. Corn syrup also contains sucrose. Also, there is a necessary balance to the amount of bulking sweetener agent to the amount of doctoring agent, in order to have a candy that is hard and is stable to cold flow and stickiness formation. Typical sucrose and corn syrup hard candy has a ratio of sucrose to corn syrup of 80:20 dry solids wt. %. Hard candy with ratios of sucrose to corn syrup of 60:40 and 40:60 dry solids wt. % can have less sucrose crystal growth, but the hard candy is usually more susceptible to cold flow and surface stickiness formation than that with the 80:20 ratio.

Typically, when the ratio of sucrose to corn syrup is 80:20 dry solids wt. %, the resulting hard candy has a cold flow and stickiness formation stability that has been found commercially acceptable. Reduction in the sucrose to a weight ratio of 60:40 or 40:60 sucrose to corn syrup creates a reduction in stability to cold flow and stickiness formation. This is also true when the sucrose is replaced with other sugars such as dextrose, fructose, or maltose. Sucrose, dextrose, fructose, maltose, and corn syrup are cariogenic, that is, they create dental caries.

Additional ingredients, such as flavors and sensates, can be added to the candy formula and they too can be delivered slowly as the hard candy dissolves during sucking or more quickly when chewed and the resulting smaller pieces dissolve.

Hard candy is a food product that is formed by a) heating a mass consisting of sweeteners at least to its boiling point in order to remove water and create a supersaturated solution, b) cooling the heated mass to thicken it, c) forming the mass into individual pieces, and then d) cooling the pieces to room temperature.

The preferred combination of ingredients of the cooked mass are such that the combination creates a cooked mass that can be poured when hot into molds or onto flat or semi flat surfaces (where the candy will harden as it cools), or can be sheet and/or shaped when partially cooled using a drop roller, rotary cutter, or other forming apparatus.

In efforts to make non-cariogenic hard candy, sorbitol and isomalt are polyols that have been combined with hydrogenated starch hydrolysate (HSH) to make hard candy. Though these polyols are non-cariogenic, unfortunately, they can create gastrointestinal disturbances (i.e. laxation).

The problem is how to create hard candy with the clarity and stability of traditional sucrose and corn syrup hard candy, and yet have less cariogenicity and low calories. The solution is hard candy made with a bulking sweetener agent where some or all of the sucrose is replaced with allulose, alone or in combination with isomaltulose, trehalose, erythritol or combinations thereof and the corn syrup doctoring agent is replaced with inulin, indigestible dextrin, sucromalt, polydextrose, or combinations thereof, and the ratio of bulking sweetener agent to doctoring agent is 70:30 to 40:60 dry solids wt.% and the resulting hard candy contains not more than 70 dry solids wt.% sucrose, preferably not more than 20 dry solids wt.% sucrose, and no corn syrup.

### IV. Chewy Candy

A third type of confection is a chewy candy. Chewy candies are opaque and generally firm, having an elastic texture that appeals to consumers. As a chewy confection is chewed, it does not break apart, but dissolves slowly in the mouth. These smaller confection pieces deliver flavor and sweetness as they dissolve into a pliable chewy substance in the mouth.

Chewy confection is a food product that is formed by a) mixing a sweetener solution (generally sugar and corn syrup), (b) creating a hydrated suspension containing water and a gelling agent, (c) combining the sweetener solution and gelling agent, (d) then adding a fat mixture after whipping the sweetener mixture and gelling agent together and aerating the formed product by forming the mass into a finished piece.

Traditional chewy confectionery products are typically made with a sweetener bulking agent and a texturizing agent. Commonly used sweeteners are sucrose and glucose syrup or corn syrup. A fat is also commonly added to such chewy confectionery products to achieve desired chew characteristics. Chewy confectionery products have a cohesive nature under normal room conditions. Chewy confectionery [product may further include water, foaming agents, humectants, artificial and natural sweeteners, emulsifiers, flavor enhancers, acids, essential oil, artificial and natural flavorings, colorings, fruit juices, vegetable juices, proteins, and other additives typically used in the production of chewy confectionery products as desired]. Often times chewy confectionery products are referred to as chewy candy, toffee, gummies, or taffy.

Traditional chewy confections products typically contain gelatin, starch, egg white (albumin), or combinations thereof as the texturing agent so that they have the chewy texture that is desirable for the products. Gelatin is the most popular of the texturizing agents as it gives the chewy confectionery products a long lasting cohesive chew; however, there are also several downfalls to using gelatin in confectionery products. Food grade gelatin is obtained from bovine or porcine raw materials and is thus undesirable to a number of groups who observe certain dietary restrictions. Additionally, since gelatin is a protein it is highly sensitive to temperature and/or acid which may cause it to degrade and foul.

Egg white, also known as albumin, is also traditionally used as a texturizing agent; however, similarly to gelatin albumin is also an animal product and is thus undesirable to a number of groups who observe certain dietary restrictions. Because egg white is also a protein there are also processing limitations similar to those of gelatin associated with the use of egg white as the texturizing agent.

Starches are also traditionally used as texturizing agents; however, they typically have a low gelling tendency and are not as useful alone in creating the ideal chewy texture in a chewy confectionery product. Starches will most often be used in conjunction with gelatin to achieve the desired chewy texture and consistency for a chewy confectionery product.

Typically when starch is used as the texturizing agent water, glucose syrup and the starch are pre-mixed and heated to a desired temperature and then cooked at that temperature until the starch has gelatinized forming a starch gel. Both modified and unmodified starches can act as gelling agents in confectionery applications. Starch is basically long polymers of glucose (a.k.a. dextrose) units that are arranged into discrete, highly organized, semi-crystalline aggregates called "starch granules". These starch polymers within the "granule" are either straight-chain/linear (amylose) or highly branched (amylopectin). Starches vary by source in their amylopectin-to-amylose ratios.

When a starch is gelatinized the crystalline structure of the granules is lost, and the granules begin to swell/take up water/increase in size and increase the viscosity of the aqueous system and fully cook out in the candy-making process to the point where the granules lose integrity/fragment/ rupture. As this cooked starch cools, the solubilized straight-chain amylose polymers re-align tightly to form a gel.

When the starch has gelatinized the confectionery product is cooled and transferred to a mixer where the remaining ingredients are added (gelatin, fat, emulsifiers, acid, flavors, etc.) and mixed until the desired density or texture is reached. The texture of the candy can be altered by whipping air into it rather than pulling it if a lighter texture is desired. A foaming agent can also be used to add texture to a traditional chewy confectionery product. The chewy confectionery product is then rolled and cut into the desired shapes and sizes. The cut candy can then be packaged into appropriate packaging for distribution.

Typically when gelatin is used as the texturizing agent water, glucose syrup and sucrose are first cooked together and then combined with a hydrated gelatin to achieve a mixture containing the desired moisture target of the final chewy confectionery product. When using the gelatin, there are temperature and time limitations with regards to exposure to high heat. Gelatin must be added at either a low heat or it can be added quickly at high heat (so the gelatin is not exposed to the high heat for a long period of time) so as to not degrade or foul the gelatin. Starch and other previously mentioned commonly used ingredients in chewy confectionery products can further be added to the mixture to achieve the desired texture, color, and taste and then the mixture is poured into molds to form while cooling.

Typically when egg white is used as the as a texturizing agent a fresh, pasteurized or rehydrated egg white is beaten into a foam with or without other ingredients. The foam is then set by cooking or by combining it with a hot carbohydrate syrup. Other commonly used chewy confectionery product ingredients can then be further added to the mixture.

As mentioned, besides being used as the sole gelling agent in traditional chewy confectionery products, some starches can also be used to partially replace/complement gelatin in gummy-type candies where a softer, less chewy/ less elastic texture is desired or to as texturizing agent.

Starch can also be used to replace or complement more expensive and/or harder-to-source ingredients such as gelatin or gum Arabic. Starch can help to modify the chew characteristics of the candy (i.e. increasing the structure/body, softness, chewiness, and elasticity of the candy while reducing "toothstick"). Starch has also been found to help inhibit sugar recrystallization and reduce cold flow in traditional chewy confectionery products.

Cold flow is a common problem with traditional chewy confectionery products. "Cold flow" is defined as the distortion, deformation, or dimensional change which takes place in a material under ambient conditions and pressures with an inability to return to its original dimensions. When products cold flow the shape of the product deforms causing inconsistent and distorted looking products which may not be very desirable by consumers. Often times cold flow becomes a problem during storage. Stickiness can also be a big problem for traditional confectionery products causing products to stick or clump together in the packaging.

Each traditional texturizing agent has its own advantages. One of the advantages of using starch as the texturizing agent in such products is that it allows one to control the viscosity of the substance during production, which helps with control of subsequent cold flow during storage. The advantage of using gelatin as the texturizing agent in chewy confectionery products is that the gelatin gives the candy a distinctive chewy texture that ranges from soft to very firm depending on the amount of gelatin used. Using egg white as the texturizing agent helps stabilize incorporated air thus keeping air bubbles from collapsing - this gives the product a light and airy texture.

As previously mentioned use of egg white and gelatin as texturizing agents is not desirable in the confectionery industry as both are animal derived ingredients. Additionally, since gelatin and egg white are proteins they are sensitive to temperature and/or acid which may cause them to degrade or foul. Use of starch, on the other hand, eliminates the use of animal products in the chewy confectionery product, but it tends to have a low gelling tendency and is not as useful alone in creating the ideal chewy texture in a chewy confectionery product thus gelatin is most often added to achieve the desired chew characteristics and texture. Gelatin tends to add a bouncy, rubbery texture.

A recent advance in chewy confections is the elimination of egg albumin. This is replaced by the use of gelatin, starches or other carbohydrates. Some of these carbohydrates are natural gums such as gum Arabic, xanthan gum, locust bean gum, gellan gum carrageenan, pectins and new carbohydrates like Nutriose, indigestible dextrin, inulin, fructooligosaccharides (FOS), and polydextrose.

A variety of sweetener bulking agents can also be used besides sucrose. Sucrose can be replaced in part or completely with allulose. Other sugars that can be used with allulose are dextrose, maltose, lactose, galactose, tagatose, various types of glucose syrups such as corn, rice, high fructose, and allulose syrups.

For a low calorie product, alditols or polyols may be used with allulose such as sorbitol, mannitol, maltitol, isomalt, erythritol, and various types of hydrogenated starch hydrolyzates (HSH). The sweetener may be added to the chewy confectionary product in the amount of about 10-99% by weight, and the allulose may be added in the amount of about 10-90% by weight of the chewy confectionary product. Fats may be added to the chewy confectionary product in the amount of about 0.5-25% by weight of the chewy confectionary product.

### V. Tableted Candy

Tableted candy is enjoyed by consumers as they can be dissolved slowly in the mouth or crunched giving it an audible sound. Tableted candies usually have a strong flavor that releases slowly and are typically used to freshen breath.

Tableted candy is a food product that is formed by blending powders comprising bulking agents, sweetening agents, binding agents and excipients and flavors. These ingredients are generally blended together as powders and fed into a typical tableting machine to make the finished piece.

For tableted confections, allulose may be used as part of the sweet bulking agent to give a low calorie conventional compressed tablet. Tableted confections are usually made to contain a strong flavor and promoted for use as a breath freshening products.

A compressed tablet is a mixture of base materials, binders, flavors, and lubricants. The base material may be a sugar or a polyol. Among the sugars that may be used are sucrose, dextrose, lactose, maltose, and other common sugars, as well as allulose. In addition, base materials may include non-sugar bulking agents. Among these are polyols such as sorbitol, maltitol, mannitol, xylitol, hydrogenated isomaltulose, lactitol, erythritol and combinations thereof. High-intensity sweeteners such as acesulfame K, aspartame, alitame, sucralose, glycyrrhizin, saccharin and cyclamates may also be included with the base materials.

Binders that are commonly used are natural gums and hydrocolloids such as gum Arabic, guar gum, agar, alginates, gum tragacanth, gelatin, corn syrup, starches and maltodextrins. Most commonly used binders are gelatin, gum Arabic and maltodextrins or corn syrups. When non-sugar polyols such as sorbitol are used as the base material, binders are not needed for binding since many of these polyols are easily compressed to form tablets. In some cases polyols such as sorbitol may also act as a binder and may be combined with sugar to form the base materials for the compressed tablet. Binders usually comprise about 2% to about 8% of the tablet.

Lubricants, also referred to as excipients, are used to give good release from the press tooling or die and punches. A variety of lubricants or non-stick agents may be used in a tablet to act as release agents. Some of these are starch, acetylated monoglycerides, waxes, lecithins, emulsifiers, and mono-, di-, or tristearates. The most common of these lubricants are magnesium or calcium stearate and stearic acid. Solid lubricants are added to the tablet composition to help form the tablet and allow for its release from the tablet press. Lubricants usually comprise about 0.5% to about 2% of the tablet. In some instances, low levels of flow agents such as silicon dioxide are added to the tablet composition to help the flow of the mixture into the tablet press.

Flavoring agents are preferably added at a level of about 0.01 % to about 2% by weight of the tablet. The flavoring agents may comprise essential oils, synthetic flavors, or mixtures including but not limited to oils derived from plants and fruits such as citrus oils, fruit essences, peppermint oil, spearmint oil, clove oil, oil of wintergreen, anise and the like. Artificial flavoring components are also contemplated for use in tablets of the present invention. Those skilled in the art will recognize that natural and artificial flavoring agents may be combined in any sensorially acceptable blend. All such flavors and flavor blends are contemplated by the present invention.

In addition, menthol and physiological cooling agents (sometimes referred to as high-intensity coolants) may be added to the tablet at a level of about 0.01% to about 1 %. Except for menthol, these cooling agents are preferably preblended with the flavor before being added to the mixture of ingredients used to form the tablet. Menthol may be preblended with the flavor or may be added to the tablet composition mixture in its crystalline form. Typical cooling agents include substituted p-menthane carboxamides, acyclic carboxamides, menthone glycerol ketals, menthyl lactate, menthyl succinate, and 3-1-menthoxypropane-1, 2 diol.

In some cases, ingredients used for tableting are wet granulated before blending with the flavor and lubricant. Most commonly, however, direct compressible material can be obtained for making the compressed tablet. The base materials are dry blended along with any high-intensity sweeteners before any flavor is added. Liquid flavors and solid flavors are added slowly to the base materials and mixed in a dry material mixer, such as a ribbon mixer or a Hobart mixer. Lastly, the lubricant such as magnesium stearate is added, but not overmixed. Overmixing the mixture with magnesium stearate can reduce lubrication. In general, the final powder mixture is allowed to sit for up to hours before being sent to the tablet press so that its properties will be suitable for tableting, including drying if the mixture is too damp.

Conventional rotary tablet presses are used to produce the preferred tablet. Tablet presses may be obtained from Fette America, Rockaway, NJ; Stokes Div. of DT Industries, Bristol, PA; or Thomas Engineering, Inc., Hoffman Estates, IL. The basic steps of rotary tablet press operation involve four steps. The first step is to fill the die cavity; the second step is to adjust the fill by removing excess fill; the third step is compression; and the fourth step is ejection of the tablet from the die. In standard production equipment, there is also a precompression step before the final compression and then ejection. Preferred confectionery tablets are about 0.2 to about 0.5 grams in size.

### EXAMPLES

### EXAMPLES OF GELLED CONFECTIONS

The following examples of the invention and comparative examples are provided by way of explanation and illustration.

Gelled confections were made, employing allulose from Anderson Global Group ("AGG"), LLC, Irvine, California, U.S.A., for feasibility testing in gelled confections to achieve sugar reduction, calorie reduction, and tooth-friendliness. The following cherry-flavored gummies were made:

**Table 1**

| Weight % | | | | | |
|---|---|---|---|---|---|
| Formula # | Summary | Crystalline | Crystalline (2) | Amorphous | Additional change |
| 8T-141C | CONTROL | Sucrose 29.5% | - | Corn Syrup | - |
| 8T-141C-1 | No sucrose | Allulose 29.5% | - | Corn Syrup | - |
| 8T-141K | 60/40 Allulose/Sucrose | Allulose 18% | Sucrose 12% | Corn Syrup | - |
| 8T-141L | No sucrose | Allulose 29.5% | - | Corn Syrup | Reb-A |

The above gummy formulas were test for moisture/water activity, sensory, rheology, and texture.

**Table 2**

| Moisture and water activity | | | |
|---|---|---|---|
| Formula # | Description | Moisture | Water Activity |
| 8T-141C | CONTROL | 18.2% | 0.70 |
| 8T-141C-1 | No sucrose | 19.9% | 0.68 |
| 8T-141K | 60/40 Allulose/Sucrose | 17.9% | 0.70 |
| 8T-141L | No sucrose w/RebA | 17.0% | 0.67 |

### Sensory results

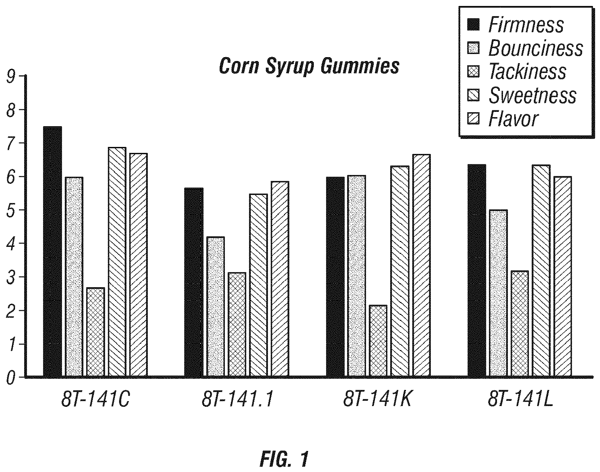

A Bench-level testing was conducted with X panelists for the samples in Table 1. Samples were rated for firmness, bounciness, tackiness, sweetness, and flavor. As depicted in Figure 1, there was a significant drop in toughness, bounciness, and sweetness for formulas with 100% replacement of sucrose with allulose. Sample 8T-141K exhibited lower toughness, otherwise performed similar to the control. Some panelists perceived a strong and lingering bitterness in some of the allulose samples, but not consistently.

### Rheology

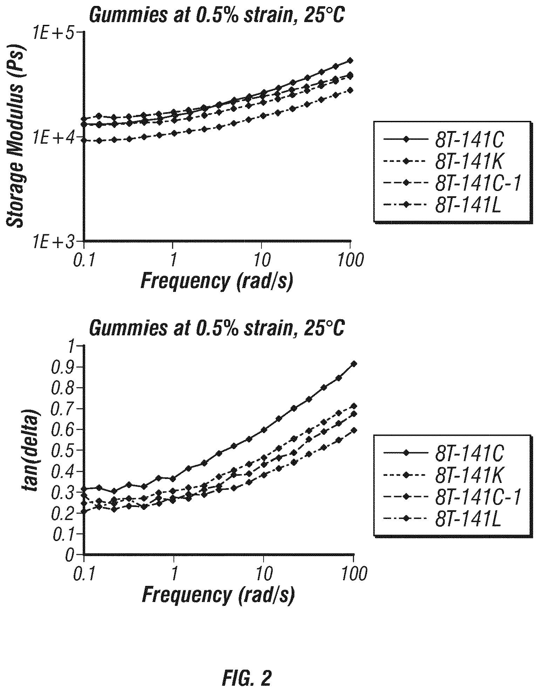

Small amplitude oscillatory shear frequency sweep was conducted on the samples of the Table 1.
As demonstrated in Figure 2, all samples of Table 1 have similar modulus vs. frequency - this predicts sensory firmness. C-1 is lower than the others due to being higher moisture than the rest (L is also an allulose formulation but is closer to control in moisture and modulus). Tan (delta) of control is higher than others, meaning it has more plasticity, less elasticity, than the formulations with allulose. A lower plasticity (higher elasticity) is more desirable for shape retention in packaging and as a key attribute (bounciness) in gummy confections.

### Texture

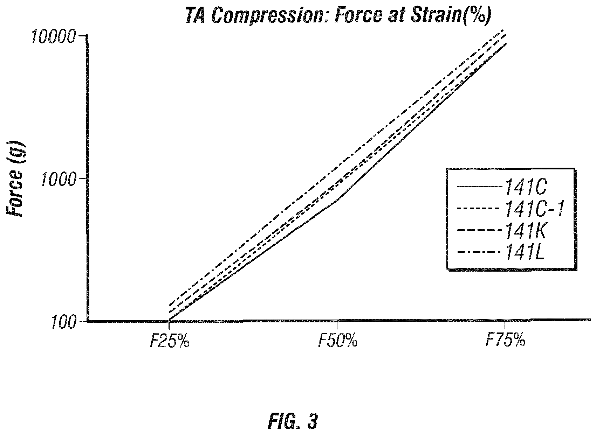

Texture analysis was conducted using compression to stain. As shown in Figure 3, all samples behave similarly. Allulose samples are equally strain hardening as the control, contributing to a gummy, bouncy, texture.
Sample 8T-141L had the highest force. The other allulose samples 8T-141C-1 and8T-141K also show higher forces than control at some strains. This could suggest they are more elastic, agreeing with the LVE rheology data.

The formulas listed in Table 3 are Examples of gelled confections having reduced calories using allulose.

Table 3: Formulas for gelled confections containing sucrose or allulose with corn syrup doctoring agent:

**Table 3**

| **Weight%** | | | | | | |
|---|---|---|---|---|---|---|
| | A | B | C | D | E | F |
| | Control: 63DE Corn Syrup/Sucrose = 55/45 | 63DE Corn Syrup/Allulose = 55/45 | 63DE Corn Syrup/Allulose = 55/45 | 63DE Corn Syrup/Allulose = 90/10 | 63DE Corn Syrup/Allulose = 80/20 | 63DE Corn Syrup/Allulose = 70/30 |
| 63 DE Corn syrup | 50.06 | 50.06 | 50.06 | 81.14 | 72.25 | 63.29 |
| Sucrose | 40.91 | 0.0 | 0.0 | 0.0 | 0.0 | 0.0 |
| Allulose | 0.0 | 40.91 | 40.91 | 9.09 | 18.17 | 27.32 |
| Water | 0.0 | 0.0 | 0.0 | 0.0 | 0.0 | 0.0 |
| Gelatin 250 | 7.69 | 7.69 | 7.69 | 8.22 | 8.07 | 7.91 |
| Citric acid 50% solution | 1.34 | 1.34 | 1.34 | 1.43 | 1.4 | 1.37 |
| High intensity sweetener | 0.0 | 0.0 | 0.11 | 0.12 | 0.12 | 0.11 |
| TOTAL | 100.0% | 100.0% | 100.0% | 100.0% | 100.0% | 100.0% |

| | | | | | | |
|---|---|---|---|---|---|---|
| All samples cooked to 86 Brix. | | | | | | |

Samples can be made by a) creating a saturated solution containing water, bulking sweetener agent and doctoring agent; b) creating a hydrated suspension containing water and gelling agent; c) combining the saturated solution with the hydrated suspension; d) removing water from the combination by cooking (i.e., heating); e) cooling the confection to thicken it; f) finishing the confection by pouring cooling mass into starch molds; and g) removing confection pieces from starch molds. If liquid allulose is used additional cooking to remove water may be needed.

Table 4: Formulas for low calorie gelled confections containing allulose, allulose syrup and erythritol.

**Table 4**

| **Weight%** | | | |
|---|---|---|---|
| | G | H | I |
| | 63DE Corn Syrup/Allulose | Allulose Syrup/Erythritol | Allulose Syrup/Branched Inulin/Erythritol |
| 63 DE Corn syrup | 50.06 | 50.06 | 50.06 |
| Allulose | 40.91 | 0.0 | 0.0 |
| Allulose Syrup | 0.0 | 21.6 | 9.34 |
| Branched Inulin | 0.0 | 0.0 | 11.78 |
| Erythritol | 0.0 | 18.45 | 18.73 |
| Gelatin 250 | 7.69 | 8.40 | 8.62 |
| Citric acid 50% solution | 1.34 | 1.40 | 1.40 |
| High intensity sweetener | 0.0 | 0.09 | 0.07 |
| TOTAL | 100.0% | 100.0% | 100.0% |

Samples can be made by a) creating a saturated solution containing water, bulking agent, and doctoring agent; b) creating a hydrated suspension containing water and gelling agent; c) combining the saturated solution with the hydrated suspension; d) removing water from the combination by cooking (i.e., heating); e) cooling the confection to thicken it; f) finishing the confection by pouring cooling mass into starch molds; and g) removing confection pieces from starch molds.

Table 5: Formulas for low calorie gelled confections containing HSH and allulose:

**Table 5**

| **Weight%** | | | | |
|---|---|---|---|---|
| | J | K | L | M |
| | Control: 63DE Corn Syrup/Allulose | Allulose Syrup/Erythritol | Branched Inulin/Allulose | 63DE Corn Syrup/Allulose |
| Allulose | 42.25 | 0.0 | 19.47 | 11.27 |
| HSH Syrup | 50.06 | 50.06 | 32.14 | 32.14 |
| Allulose syrup | 0.0 | 23.0 | 20.0 | 10.0 |
| Branched inulin | 0.0 | 18.2 | 0.0 | 18.2 |
| Erythritol/Maltitol | 0.0 | 0.0 | 19.04* | 19.04** |
| Gelatin 250 | 7.69 | 8.67 | 9.27 | 9.27 |
| High intensity sweetener | 0.0 | 0.07 | 0.08 | 0.08 |
| TOTAL | 100.0% | 100.0% | 100.0% | 100.0% |

| | | | | |
|---|---|---|---|---|
| *Erythritol, **Maltitol | | | | |

Samples can be made by a) creating a saturated solution containing water, bulking sweetener agent, and doctoring agent; b) creating a hydrated suspension containing water and gelling agent; c) combining the sweetener solution with the hydrated suspension; d) removing water from the combination by cooking (i.e., heating); e) cooling the confection to thicken it; f) finishing the confection by pouring cooling mass into starch molds; and g) removing confection pieces from starch molds.

### EXAMPLES OF HARD CANDY

The following Tables below demonstrate how low calorie hard candies can be made with allulose:

**Table 6**

| **Weight%** | | | | | | | | |
|---|---|---|---|---|---|---|---|---|
| | N | O | P | Q | R | S | T | U |
| | Allulose /Corn Syrup (80/20) | Allulose/ Linear Inulin (80/20) | Allulose/ Linear Inulin (60/40) | Allulose/ Linear Inulin (40/60) | Allulose/ Linear Inulin (60/40) | Allulose /Linear Inulin (80/20) | Allulose/ Linear Inulin (60/40) | Allulose/ Linear Inulin (40/60) |
| Allulose | 79.66 | 79.65 | 62.57 | 43.59 | 22.15 | 40.0 | 20.0 | 20.0 |
| Allulose Syrup | 0.0 | 0.0 | 0.0 | 0.0 | 0.0 | 39.65 | 42.57 | 23.59 |
| Corn syrup | 16.52 | 0.0 | 0.0 | 0.0 | 0.0 | 0.0 | 0.0 | 0.0 |
| Linear Inulin | 0.0 | 16.52 | 33.61 | 52.59 | 74.03 | 16.52 | 33.61 | 52.59 |
| Water | 0.0 | 0.0 | 0.0 | 0.0 | 0.0 | 0.0 | 0.0 | 0.0 |
| HIS | 0.07 | 0.07 | 0.07 | 0.07 | 0.07 | 0.07 | 0.07 | 0.07 |
| Flavor | 0.01 | 0.01 | 0.01 | 0.01 | 0.01 | 0.01 | 0.01 | 0.01 |
| Citric acid | 3.74 | 3.74 | 3.74 | 3.74 | 3.74 | 3.74 | 3.74 | 3.74 |
| TOTAL | 100.0% | 100.0% | 100.0% | 100.0% | 100.0% | 100.0% | 100.0% | 100.0% |

| | | | | | | | | |
|---|---|---|---|---|---|---|---|---|
| HIS = high intensity sweetener | | | | | | | | |

The hard candy products of Table 6 above can be produced by combining inulin, allulose, and water, heating the combination until the cooked mass reaches the desired temperature, adding HIS (high intensity sweeteners), acid and flavor, and then cooling the cooked mass into a malleable, plastic-like texture. The cooked mass can be processed through a dropped roller.

Table 7 demonstrates formulas for low calories hard candy with allulose and different doctoring agents.

**Table 7**

| **Weight%** | | | | | |
|---|---|---|---|---|---|
| | V | W | X | Y | Z |
| | Allulose/Corn Syrup | Allulose/Linear Inulin | Allulose/Bra nched Inulin | Allulose/Trehalose/ Branched Inulin | Allulose/Trehalose/ Linear Inulin |
| Allulose | 81.80 | 66.88 | 66.89 | 33.45 | 20.0 |
| Trehalose | 0.0 | 0.0 | 0.0 | 33.45 | 29.06 |
| Corn syrup | 16.56 | 0.0 | 0.0 | 0.0 | 0.0 |
| Linear Inulin | 0.0 | 31.26 | 0.0 | 0.0 | 49.05 |
| Branched inulin | 0.0 | 0.0 | 31.25 | 31.22 | 0.0 |
| HIS | 0.0 | 0.08 | 0.08 | 0.10 | 0.11 |
| Flavor | 0.01 | 0.01 | 0.01 | 0.01 | 0.01 |
| Citric acid | 1.63 | 1.77 | 1.77 | 1.77 | 1.77 |
| TOTAL | 100.0% | 100.0% | 100.0% | 100.0% | 100.0% |

The hard candy products in Table 7 above can be produced by mixing, cooling to the desired temperature, and then forming a semi-cooled mass into individual hard candy pieces using a drop roller.

Table 8 below provides formulas for low calorie hard candy with different bulk sweetening agents and different doctoring agents.

**Table 8**

| **Weight%** | | | | | | | |
|---|---|---|---|---|---|---|---|
| | AA | BB | CC | DD | EE | FF | GG |
| | Allulose/Corn Syrup | Isomaltulose/Brown Rice Syrup | Isomaltulose/HSH | Isomaltulose/Branched Inulin | Isomaltulose/Linear Inulin | Isomaltulose/Sucromalt/Erythritol | Erythritol/Sucromalt |
| Allulose | 81.80 | 40.0 | 30.0 | 40.0 | 67.05 | 32.65 | 40.0 |
| Isomaltulose | 0.0 | 24.33 | 34.88 | 26.91 | 0.0 | 0.0 | 0.0 |
| Erythritol | 0.0 | 0.0 | 0.0 | 0.0 | 0.0 | 32.62 | 27.36 |
| Corn syrup | 16.56 | 0.0 | 0.0 | 0.0 | 0.0 | 0.0 | 0.0 |
| HSH | 0.0 | 33.88 | 0.0 | 0.0 | 0.0 | 0.0 | 0.0 |
| Branched Inulin | 0.0 | 0.0 | 0.0 | 31.22 | 0.0 | 0.0 | 0.0 |
| Liner inulin | 0.0 | 0.0 | 0.0 | 0.0 | 31.44 | 0.0 | 0.0 |
| Nutriose | 0.0 | 0.0 | 33.31 | 0.0 | 0.0 | 33.53 | 31.44 |
| HIS | 0.0 | 0.08 | 0.08 | 0.08 | 0.08 | 0.08 | 0.08 |
| Flavor | 0.01 | 0.01 | 0.01 | 0.01 | 0.01 | 0.01 | 0.01 |
| Citric acid | 1.63 | 1.70 | 1.72 | 1.78 | 1.42 | 1.12 | 1.12 |
| TOTAL | 100.0% | 100.0% | 100.0% | 100.0% | 100.0% | 100.0% | 100.0% |

The hard candy products of Table 8 above can be produced by mixing, cooking until the mass reaches the desired temperature and then forming a semi-cooled mass into individual hard candy pieces using a drop roller.

Table 9 below gives formulas for low calorie hard candy with different bulking sweetener agents and different doctoring agents.

**Table 9**

| **Weight%** | | | | |
|---|---|---|---|---|
| | HH | II | JJ | KK |
| | Allulose/Corn Syrup | Isomaltulose/Brown Rice Syrup | Isomaltulose/HSH | Isomaltulose/Branched Inulin |
| Allulose | 41.80 | 36.87 | 31.45 | 20.0 |
| Trehalose | 20.0 | 0.0 | 0.0 | 11.32 |
| Isomaltulose | 20.0 | 10.0 | 0.0 | 0.0 |
| Erythritol | 0.0 | 20.0 | 10.48 | 10.45 |
| Corn syrup | 16.56 | 0.0 | 0.0 | 0.0 |
| Indigestible Dextrin | 0.0 | 31.22 | 0.0 | 0.0 |
| Brown Rice Syrup | 0.0 | 0.0 | 24.82 | 0.0 |
| Linear inulin | 0.0 | 0.0 | 31.45 | 56.44 |
| HIS | 0.0 | 0.13 | 0.12 | 0.12 |
| Flavor | 0.01 | 0.01 | 0.01 | 0.01 |
| Citric acid | 1.63 | 1.77 | 1.67 | 1.66 |
| TOTAL | 100.0% | 100.0% | 100.0% | 100.0% |

The hard candy products in Table 9 above can be produced by mixing, cooling to the desired temperature, and then forming a semi-cooled mass into individual hard candy pieces using a drop roller.

### EXAMPLES OF CHEWY CANDY

The following Tables below demonstrate how low calorie chewy confections containing allulose and other sweet bulking agents:

**Table 10**

| **Weight%** | | | | | | | |
|---|---|---|---|---|---|---|---|
| | LL | MM | NN | OO | PP | QQ | RR |
| Gelatin | 1.9 | 1.9 | 1.9 | 1.9 | 1.9 | 1.9 | 1.9 |
| Gum Arabic | 0.2 | 0.2 | 0.2 | 0.2 | 0.2 | 0.2 | 0.2 |
| Water | 8.0 | 8.0 | 8.0 | 8.0 | 8.0 | 8.0 | 8.0 |
| Corn Syrup | 39.9 | 39.9 | 39.9 | 30.0 | 30.0 | 30.0 | 30.0 |
| Allulose | 39.9 | 20.0 | 20.0 | 39.9 | 39.9 | 39.9 | 29.9 |
| Sucrose | 0.0 | 19.9 | 10.0 | 0.0 | 0.0 | 0.0 | 5.0 |
| Dextrose | 0.0 | 0.0 | 5.0 | 0.0 | 0.0 | 0.0 | 5.0 |
| Trehalose | 0.0 | 0.0 | 4.9 | 0.0 | 0.0 | 0.0 | 0.0 |
| Palm Kernel Oil | 6.3 | 6.3 | 6.3 | 6.3 | 6.3 | 6.3 | 6.3 |
| Emulsifiers | 0.1 | 0.1 | 0.1 | 0.1 | 0.1 | 0.1 | 0.1 |
| Acids | 0.5 | 0.5 | 0.5 | 0.5 | 0.5 | 0.5 | 0.5 |
| 4:1 Fondant | 3.0 | 3.0 | 3.0 | 3.0 | 3.0 | 3.0 | 3.0 |
| Flavor | 0.2 | 0.2 | 0.2 | 0.2 | 0.2 | 0.2 | 0.2 |
| Nutriose | 0.0 | 0.0 | 0.0 | 9.9 | 0.0 | 0.0 | 9.9 |
| Indigestible dextrin | 0.0 | 0.0 | 0.0 | 0.0 | 9.9 | 0.0 | 0.0 |
| Inulin | 0.0 | 0.0 | 0.0 | 0.0 | 0.0 | 9.9 | 0.0 |
| TOTAL | 100.0% | 100.0% | 100.0 % | 100.0% | 100.0% | 100.0% | 100.0% |

These examples can be made by 1) hydrolyzing gelatin and gum Arabic together, 2) cooking sugars and syrup to the desired temperature, 3) melting fat and emulsifiers, 4) mixing gelatin and sugar/syrup together, 5) adding fat and mixing until it thickens, 6) whip to aerate, 7) add fondant and flavor, and mix, and 9) pull by hand for 3 minutes.

The following examples are low calorie, sugar free chewy confections containing allulose and other alditols.

**Table 11**

| **Weight%** | | | | | | | | |
|---|---|---|---|---|---|---|---|---|
| | SS | TT | UU | VV | WW | XX | YY | ZZ |
| Gelatin | 1.9 | 1.9 | 1.9 | 1.9 | 1.9 | 1.9 | 1.9 | 1.9 |
| Gum Arabic | 0.2 | 0.2 | 0.2 | 0.2 | 0.2 | 0.2 | 0.2 | 0.2 |
| Water | 8.0 | 8.0 | 8.0 | 8.0 | 8.0 | 8.0 | 8.0 | 8.0 |
| HSH Syrup | 39.9 | 39.9 | 39.9 | 39.9 | 30.0 | 30.0 | 30.0 | 35.9 |
| Allulose | 29.9 | 20.0 | 10.0 | 20.0 | 29.9 | 29.9 | 39.9 | 9.9 |
| Sorbitol | 10.0 | 0.0 | 10.0 | 0.0 | 0.0 | 0.0 | 0.0 | 0.0 |
| Erythritol | 0.0 | 19.9 | 0.0 | 5.0 | 10.0 | 10.0 | 0.0 | 20.0 |
| Maltitol | 0.0 | 0.0 | 9.9 | 9.9 | 0.0 | 0.0 | 0.0 | 10.0 |
| Palm Kernel Oil | 6.3 | 6.3 | 6.3 | 6.3 | 6.3 | 6.3 | 6.3 | 6.3 |
| Emulsifiers | 0.1 | 0.1 | 0.1 | 0.1 | 0.1 | 0.1 | 0.1 | 0.1 |
| Acids | 0.5 | 0.5 | 0.5 | 0.5 | 0.5 | 0.5 | 0.5 | 0.5 |
| 4:1 Fondant | 3.0 | 3.0 | 3.0 | 3.0 | 3.0 | 3.0 | 3.0 | 3.0 |
| Flavor | 0.2 | 0.2 | 0.2 | 0.2 | 0.2 | 0.2 | 0.2 | 0.2 |
| Nutriose | 0.0 | 0.0 | 0.0 | 0.0 | 9.9 | 0.0 | 9.9 | 4.0 |
| Inulin | 0.0 | 0.0 | 0.0 | 0.0 | 0.0 | 9.9 | 0.0 | 0.0 |
| TOTAL | 100.0% | 100.0 % | 100.0% | 100.0% | 100.0% | 100.0 % | 100.0 % | 100.0% |

The examples can be made as described above.

### EXAMPLES OF TABLETED CONFECTIONS

The following examples below are low calorie tableted confections containing allulose and other sweet bulking agents:

**Table 12**

| **Weight%** | | | | | | |
|---|---|---|---|---|---|---|
| | AAA | BBB | CCC | DDD | EEE | FFF |
| Allulose | 95.0 | 59.0 | 59.0 | 40.0 | 60.0 | 48.0 |
| Sucrose | 0.0 | 39.0 | 0.0 | 16.0 | 0.0 | 10.0 |
| Dextrose | 0.0 | 0.0 | 37.0 | 40.0 | 0.0 | 20.0 |
| Trehalose | 0.0 | 0.0 | 37.0 | 40.0 | 0.0 | 20.0 |
| Flavor | 0.75 | 0.75 | 0.75 | 0.93 | 0.93 | 0.93 |
| Magnesium Stearate | 0.64 | 0.64 | 0.64 | 0.64 | 0.64 | 0.64 |
| Encapsulated sweetener | 0.28 | 0.28 | 0.28 | 0.28 | 0.28 | 0.28 |
| Sodium Dioxide | 0.15 | 0.15 | 0.15 | 0.15 | 0.15 | 0.15 |
| Maltodextrin | 0.0 | 0.0 | 2.0 | 2.0 | 2.0 | 2.0 |
| TOTAL | 100.0% | 100.0% | 100.0% | 100.0% | 100.0% | 100.0% |

Ingredients can be blended together as powder and liquid flavor added to the blended ingredients. The blended powders can be tableted in conventional tableting equipment.

The following examples demonstrate that low calorie sugarfree tablets can be made with allulose and other alditols sweet bulking agents.

**Table 13**

| **Weight%** | | | | | | | |
|---|---|---|---|---|---|---|---|
| | GGG | HHH | III | JJJ | KKK | LLL | MMM |
| Allulose | 50.0 | 55.5 | 57.5 | 50.0 | 55.5 | 30.0 | 80.0 |
| Sorbitol | 47.5 | 0.0 | 0.0 | 0.0 | 0.0 | 10.0 | 0.0 |
| Isomalt | 0.0 | 0.0 | 40.0 | 0.0 | 0.0 | 10.0 | 0.0 |
| Xylitol | 0.0 | 0.0 | 0.0 | 55.5 | 25.0 | 0.0 | 0.0 |
| Erythritol | 0.0 | 40.0 | 0.0 | 0.0 | 25.0 | 55.5 | 17.5 |
| Magnesium Stearate | 1.0 | 1.0 | 1.0 | 1.0 | 1.0 | 1.0 | 1.0 |
| Flavor | 0.75 | 0.75 | 0.75 | 0.75 | 0.75 | 0.75 | 0.75 |
| Menthol | 0.20 | 0.20 | 0.20 | 0.20 | 0.20 | 0.20 | 0.20 |
| Sodium Dioxide | 0.15 | 0.15 | 0.15 | 0.15 | 0.15 | 0.15 | 0.15 |
| Gelatin | 0.0 | 2.0 | 0.0 | 2.0 | 2.0 | 2.0 | 0.0 |
| HIS | 0.4 | 0.4 | 0.4 | 0.4 | 0.4 | 0.4 | 0.4 |
| TOTAL | 100.0% | 100.0% | 100.0% | 100.0% | 100.0% | 100.0% | 100.0% |

Ingredients can be blended together as powder and liquid flavor added to the blended ingredients. The blended powders can be tableted in conventional tableting equipment.

Also disclosed herein is the subject matter disclosed in the following numbered statements:
1. A confectionary composition selected from gelled, chewy, tableted and hard candies wherein the confectionary comprises 1% to 95% by weight allulose, and 1% to 50% bulk sweetener.
2. The confectionary composition of statement 1, wherein the confectionary comprises 1% to 50% by weight allulose.
3. The confectionary composition of statement 1, wherein the allulose is in the form selected from the group consisting of crystalline allulose, amorphous allulose, allulose syrup, and mixtures thereof.
4. The confectionary composition of statement 1, wherein the confectionary comprises a bulk sweetener selected from sugar, dextrose, fructose, xylose, mannose, isomaltulose, sorbitol, maltitol, isomalt, mannitol, xylitol, erythritol, and lactitol.
5. The confectionary composition of statement 1, wherein the bulk sweetener is sucrose.
6. The confectionary composition of statement 1, wherein the allulose to bulk sweetener ratio is 60:40 by weight of the confectionary composition.
7. The confectionary composition of statement 1, wherein the confectionary composition has a moisture content of 15% to 20%.
8. The confectionary composition of statement 1, wherein the bulk sweetener is combined with high potency sweeteners selected from thaumatin, aspartame, acesulfame K, sodium saccharin, glycyrrhizin, alitame, cyclamate, stevioside, dihydrochalcones, stevia, steviol glycosides, glycosylated steviolglycosides, and luo han guo.
9. The confectionary composition of statement 1, wherein the confectionary composition is a gelled confection.
10. A method of making a confection comprising the steps of:
   a) coevaporating an aqueous solution comprising allulose and a plasticizing agent to form a syrup, and
   b) mixing the syrup with doctoring agents, bulking agents, and flavoring agents to produce a confection composition.
11. A method of making a confection comprising the steps of:
   a) codrying a solution containing allulose and another sweetener selected from the group consisting of sugar sweeteners, alditol sweeteners, and high intensity sweeteners, and
   b) mixing the codried allulose/ sweetener with doctoring agents and flavoring agents to produce a confection composition.
      The method of statement 9 wherein the coevaporating solution containing allulose contains another sweetener selected from the group consisting of sugar sweeteners, alditol sweeteners, and high intensity sweeteners, and
   c) mixing the coevaporated allulose and sweetener blend with doctoring agents and flavoring agents to produce a confection composition.

## Claims

1. A confectionary composition, which is a gelled candy wherein the confectionary comprises 1% to 95% by weight allulose, and 1% to 50% bulk sweetener.

2. The confectionary composition of claim 1, wherein the confectionary comprises 50% to 95% by weight allulose.

3. The confectionary composition of claim 1 or claim 2, wherein the allulose is in the form selected from the group consisting of crystalline allulose, amorphous allulose, allulose syrup, and mixtures thereof.

4. The confectionary composition of any one of the preceding claims, wherein the confectionary comprises a bulk sweetener selected from sorbitol, maltitol, isomalt, mannitol, xylitol, erythritol, and lactitol.

5. The confectionary composition of any one of the preceding claims, wherein the bulk sweetener is erythritol.

6. The confectionary composition of any one of the preceding claims, wherein the allulose to bulk sweetener ratio is 60:40 by weight of the confectionary composition.

7. The confectionary composition of claim 1, wherein the confectionary composition has a moisture content of 15% to 20%.

8. The confectionary composition of claim 1, wherein the bulk sweetener is combined with high potency sweeteners selected from thaumatin, aspartame, acesulfame K, sodium saccharin, glycyrrhizin, alitame, cyclamate, stevioside, dihydrochalcones, stevia, steviol glycosides, glycosylated steviolglycosides, and luo han guo.
